# EUROPEAN PATENT SPECIFICATION

(11) **EP 2 399 442 B1**
(45) Date of publication and mention of the grant of the patent: **05.06.2013**
(21) Application number: 11155697.3
(22) Date of filing: 23.02.2011
(51) Int. Cl.: A01B 59/042, B60D 1/02, B60D 1/28

(54) **A tow bar having a pin with automatic coupling**
Zugstange mit einem Stift mit automatischer Kupplung
Barre de remorquage dotée d'une broche avec couplage automatique

(30) Priority: 25.06.2010 IT BO20100409
(43) Date of publication of application: 28.12.2011
(73) Proprietor: CBM S.p.A., 41100 Modena (IT)
(72) Inventor: Cornia, Enrico, Maria, 41100 Modena (IT)
(74) Representative: Provvisionato, Paolo

(56) References cited:
- EP-A1- 1 918 134
- DE-U1- 29 919 497
- US-A1- 2008 067 785

## Description

The present invention relates to a tow bar for an agricultural tractor and the like.

The invention has been developed with particular, although non-limiting, regard to a tow bar for an agricultural tractor, of the type comprising:
- an end fork having two branches defining a mouth for receiving a towing eye of a trailer, two axially aligned holes being respectively provided one in each of the two branches of the fork,
- a tow pin selectively mobile between an engagement position, in which the tow pin extends through the mouth and is engaged in both of the axially aligned holes, and a disengagement position, in which the pin is retracted into only one of the two holes in order to leave the mouth of the fork free,
- means for restraining the tow pin in the disengagement position, which means are selectively unlockable to enable the tow pin to move into the engagement position,
- control means associated with the restraining means and activatable by a towing eye which penetrates into the mouth of the fork to bring about the unlocking of the means for restraining the tow pin and to enable the tow pin to move into the position of engagement of the towing eye.

A tow bar of the type indicated above is known, for example, from the document EP-A-0748707. In that document a U-shaped handle is connected in an articulated manner in a hole formed in the vicinity of the top end of the pin. In the disengagement position of the pin, the handle is fixed restrainedly in a groove formed in the upper part of the tow bar and keeps the pin raised. When a towing eye enters the mouth of the fork at the end of the bar, it presses a lever having an appendage which comes out in the groove and pushes the handle out of the groove, thus freeing the pin which, by descending, drags with it one end of the handle which is articulated thereto. The other end of the handle, freed from the groove, slides on the slopingly shaped upper back of the fork and, when the pin has reached the lower position of engagement of the towing eye, it engages behind an undercut of the back of the fork in order to prevent the accidental raising of the pin in the towing state.

The known tow bars have various disadvantages. They are particularly complex and expensive and, in addition, they are subject to malfunctions caused by the accumulation of earth, mud and debris which tend to be deposited precisely in the rear area of the agricultural tractor from which the tow bar projects. The tow bar of the document EP-A-0748707 is particularly subject to those disadvantages because its correct functioning depends mainly on the cleanness of the groove for locking the handle, and on the cleanness of the back of the fork on which the handle slides when it is freed, in order to enable the pin to descend and to be coupled securely. It is also necessary to ensure the correct articulation of the handle on the pin, and also the absolute cleanness of the grooves in which the handle portions which project from the pin are accommodated. The debris and mud could also prevent the correct functioning of the appendage which extracts the handle from the groove, with the consequent malfunctioning of the closure of the pin and the risks connected with the incorrect coupling of the trailer.

A further tow bar comprising the features of the preamble of claim 1 is known from DE-U-29 919 497.

The object of the present invention is to overcome the problems and disadvantages of the prior art by providing a tow bar which does not exhibit the risks of malfunctioning indicated above with reference to the prior art but which ensures efficient, safe and reliable functioning in any condition, even in particularly difficult conditions.

Another object of the present invention is to provide a tow bar having a tow pin with automatic coupling which is simple and economical to manufacture, maintain and use.

In order to achieve the objects indicated above, the invention relates to a tow bar of the type indicated in the introduction to the present description, wherein, in the disengagement position, the restraining means interact with a lower portion of the tow pin in order to keep it raised and to prevent it from moving into the engagement position.

With such a configuration of the tow bar, the functionality of the restraining means is not dependent on the conditions of cleanness of the upper part of the end fork of the tow bar.

In addition, the tow bar according to the present invention has a reduced space requirement in terms of height, which is particularly advantageous since the power take-off of the tractor is normally positioned above the tow bar, and this necessitates free space for easy and correct use.

The tow bar according to the invention comprises restraining means having an appendage on which the lower end of the tow pin rests, in the disengagement position. Thus, the tow pin is held in the disengagement position in a simple and safe manner, and it is necessary only to retract the appendage because the pin descends immediately by gravity into the position of engagement of the towing eye.

According to another variant of the invention, the restraining means are secured to the control means. This permits the safe and reliable freeing of the tow pin from the disengagement position, because the moving of the control means on the part of the towing eye necessarily brings about the movement of the means for restraining the tow pin. In order to render that operation even more safe and reliable, in another variant of the invention the restraining means are produced integrally with the control means and they are preferably constituted by a single bent metal wire.

In the position of engagement of the towing eye of a trailer, there is a risk that the tow pin will rise inadvertently, for example, owing to the thrust exerted thereon by the towing eye, and therefore the known tow bars comprise means for opposing such accidental unlocking of the tow pin.

According to an advantageous variant of the present invention, a safety device which interferes selectively with an upper portion of the tow pin is provided. That safety device may be in the form of an articulated lever having a projection which interferes, in the engagement position, with a groove formed in the tow pin in the vicinity of a head thereof. In the disengagement position, the projection of the articulated lever rests against the flank of the tow pin in order to keep the safety device unlocked.

According to one advantageous aspect of the invention, the tow pin may be free from holes, so that it is much stronger and cleaner than the pins of the prior art.

Another particularly advantageous aspect of the invention is provided by the fact that, in the engagement position, no mobile member or part thereof projects above an upper surface of the end fork, thus leaving mostly free the space for the power take-off of the tractor.

Further features and advantages will emerge from the following detailed description of a preferred but non-limiting embodiment, with reference to the appended drawings which are given purely by way of example and in which:
- Figure 1 is a perspective view of a tow bar according to the invention,
- Figure 2 is a longitudinal section through the tow bar of Figure 1, in a position of disengagement,
- Figure 3 is a longitudinal section through the tow bar similar to that of Figure 2, in a transitory position of the pin, immediately after disengagement, and
- Figure 4 is a longitudinal section through the tow bar similar to those of Figures 2 and 3, in a position of engagement of the towing eye of a trailer.

Referring now to the drawings, a tow bar for an agricultural tractor comprises an end 11 of a bar 10, which is generally, although this is not to constitute a limitation, of rectangular or square cross-section, and on which is mounted a hammer strap 12, preferably by means of a screw 13 and a bolt 14, to which a U-shaped plate 15 is also secured for purposes not relating to the present invention. The bar end 11 and the hammer strap 12 together form a fork 16 having an end wall 17 and two branches, an upper branch 18 and a lower branch 19. The fork 16 defines a mouth 20 which can be entered, as will be better understood hereinafter, by a towing eye 21 of a trailer to be towed by means of the tow bar.

Formed in the upper 18 and lower 19 branches of the fork 16 are two respective upper 22 and lower 23 axial holes in which a tow pin 24 can be inserted and slide, as will be described in more detail hereinafter. Preferably, although this is not to constitute a limitation, the axial holes 22, 23 are circular and the tow pin 24 is cylindrical, having an outside diameter corresponding substantially to the diameter of the axial holes 22, 23, except for sufficient clearance to permit the sliding and unimpeded movement of the tow pin 24 in the axial holes 22, 23.

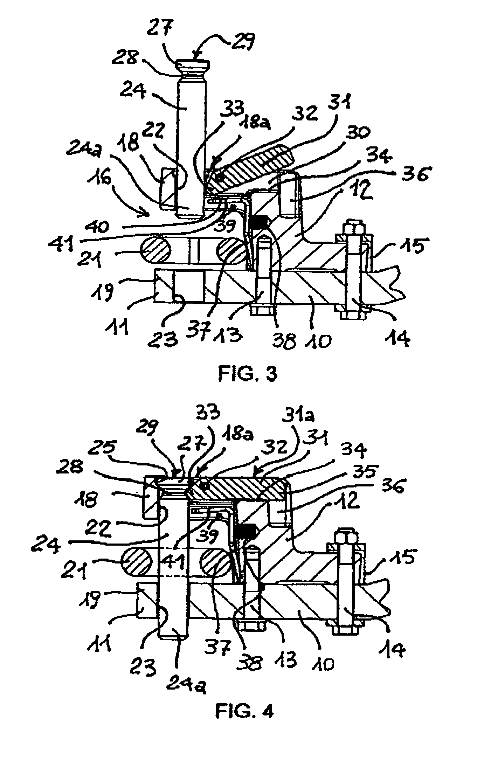

The upper axial hole 22 has a small widened or flared portion 25 at its outlet in the upper wall 18a of the upper branch 18, where there is also a wide transverse groove 26 which intersects the hole 22 and which is used to grasp with the fingers a head 27 of the tow pin 24, which extends above a neck 28, and to raise it from the position of closure of the tow bar illustrated in Figure 4. The head 27 preferably has a diameter slightly larger than that of the tow pin 24 in order to become lodged in the widened or flared portion 25 of the upper axial hole 22, in the closure position illustrated in Figure 4, preventing the further descent of the pin 24, as will emerge more clearly hereinafter. Preferably, the top 29 of the head 27 is flat, and the height of the head 27 and the height of the housing 25 are such as to ensure that, in the closure position illustrated in Figure 4, the top 29 of the head 27 does not project from the upper wall 18a of the upper branch 18, thus minimising the upper space requirement of the tow bar so as to leave as much space as possible in the region normally occupied by the power take-off of the tractor.

Formed on the upper wall 18a of the upper branch 18 is a central housing 30 which extends longitudinally from the upper axial hole 22 and in which is mounted a plate or small lever 31 articulated about a transverse peg 32 and provided with a nose 33 shaped in such a manner as to engage in the neck 28 of the tow pin 24 when the tow pin 24 is in the closure position illustrated in Figure 4. In that position, the small lever 31 rests against the base 34 of the central housing 30 and therefore prevents the accidental raising of the tow pin 24 if the latter were subjected to upward thrust by the towing eye 21. In the closure position of the tow pin 24 illustrated in Figure 4, the back 31a of the small lever 31 is substantially in the same plane as the upper wall 18a of the upper branch 18 while its end 35 remote from the nose 33 projects into a slot 36 formed in the hammer strap 12.

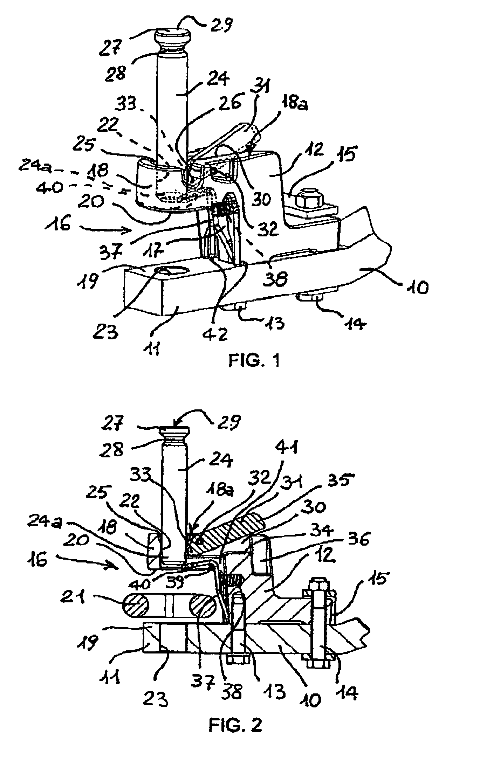

Located inside the mouth 20 of the fork 16 is a lever member 37 articulated to the end wall 17 in the vicinity of the lower branch 19 of the fork 16. The lever member 37 projects into the mouth 20, urged by a spring 38 accommodated in the end wall 17, until it reaches a stop position defined by an abutment peg 39 (Figure 2), and can pivot against the action of the spring 38 until it reaches a position adjacent to the end wall 17 of the fork 16 (Figures 3 and 4). The lever member 37 is provided with an appendage 40 which is contained in an opening 41 formed in the upper branch 18 and which projects, in the stop position of the lever member illustrated in Figure 2, at least partially at a lower region of the upper axial hole 22, approximately where the latter leads into the mouth 20, in order to keep the tow pin 24 raised, supporting the lower end 24a thereof until the lever member 37 is moved towards the end wall 17, as will be described in more detail hereinafter. Preferably, although this is not to constitute a limitation, the lever member 37, including its appendage 40, is produced using the same bent metal wire, the ends of which also act as articulation pintles 42 for the lever member 37. Naturally, different configurations of the lever member 37 are possible, for example using a piece of bent sheet-metal or other components of the same type. In general terms, therefore, the lever member 37, with its appendage 40, has a configuration in the form of an inverted L.

The tow bar 10 is mounted in the usual manner on an agricultural tractor, for example at the rear part thereof immediately below the power take-off, so that the end fork 16 projects rearwardly. In the unlocked state of the tow bar 10, as illustrated in Figures 1 and 2, the tow pin 24 is raised, occupying only the upper axial hole 22 and thus leaving the mouth 20 of the fork 16 free. The lever member 37 is urged by the spring 38 towards the inside of the mouth 20, against the abutment peg 39, so that the appendage 40 projects sufficiently to obstruct the movement of the tow pin 24 in the upper axial hole 22 and therefore to support the lower end 24a thereof. In that state, the nose 33 of the small lever 31 rests against the flank of the tow pin 24 which thus keeps it raised.

At the stage of coupling a trailer, the tractor and/or the trailer is/are manoeuvred in such a manner as to insert the towing eye 21 into the fork 16 until they are caused to press the lever member 37 and make it pivot, against the thrust of the spring 38, bringing it close to the end wall 17 of the fork. In that state, illustrated in Figure 3, the appendage 40 is retracted from the lower end 24a of the tow pin 24, which is thus free to descend by gravity. The geometry and the dimensional ratios between the fork 16 and the towing eye 21 are such that the tow pin 24 is aligned with the hole of the towing eye, enabling it to be coupled during its free descent. During the descent of the tow pin 24, the nose 33 of the small lever 31 slides on the flank thereof, keeping the small lever 31 in the opening position. Once the coupling stage has been initiated, it is not necessary for the towing eye 21 to continue to press on the lever member 37 because the descent of the tow pin 24 prevents the return thereof into the resting position.

When the tow pin 24 reaches the limit of its travel, with the lower end 24a inserted in the lower axial hole 23 and the head 27 in abutment in the widened portion 25, the nose 33 of the small lever 31 can engage in the neck 28 of the tow pin 24 owing to the pivoting of the small lever 31 caused by its own weight. In that locking situation, the small lever 31 prevents the accidental disengagement of the device which could be caused by accidental vertical movements of the tow pin 24. In that locked configuration, illustrated in Figure 4, the agricultural tractor provided with the tow bar 10 is able to tow the trailer provided with the towing eye 21, after it has been coupled automatically.

In order to uncouple the device, it is necessary to pivot the small lever 31 manually, raising the end 35 thereof by inserting a finger into the slot 36. The tow pin 24 can thus be raised by grasping its head 27 with two fingers inserted in the U-shaped groove 26, until it reaches the uncoupling or disengagement position of Figure 1 in which the appendage 40 of the lever member 37, which is no longer held by the flank of the tow pin 24, is urged by the spring 38 into the position of supporting the lower end 24a of the tow pin 24.

As can be seen clearly in Figure 4, in the locked configuration, the tow bar has a minimum space requirement in the upper part where no element projects, even partially, from the upper wall of the hammer strap 12. Naturally, this is not a condition necessary for the functioning of the present invention because the invention could achieve its objects even if, for example, the tow pin 24 projected a little from the upper hole 22 in the locked configuration. The tow bar of the present invention has an extremely "clean" configuration, with wide surfaces and large recesses which are not prone to being filled with mud, earth and the like, and which can in any case be readily cleaned, even roughly, without reducing or impeding the efficient functionality of coupling and uncoupling a trailer.

Naturally, the principle of the invention remaining the same, the forms of embodiment and details of construction may be varied widely with respect to those described and illustrated without thereby departing from the scope of the present invention, as defined by the claims.

## Claims

1. A tow bar for an agricultural tractor, comprising:
- an end fork (16) having two branches (18, 19) defining a mouth (20) for receiving a towing eye (21) of a trailer, two axially aligned holes, one upper (22) and the other lower (23), being respectively provided one in each of the two branches (18, 19) of the fork (16),
- a tow pin (24) selectively mobile between an engagement position, in which the tow pin (24) extends through the mouth (20) and is engaged in both of the upper and lower holes (22, 23), and a disengagement position, in which the tow pin (24) is retracted into the upper hole (22) in order to leave the mouth (20) of the fork (16) free,
- means (40) for restraining the tow pin (24) in the disengagement position, which means are selectively unlockable to enable the tow pin (24) to move into the engagement position,
- control means (37) associated with the restraining means (40) and activatable by a towing eye (21) which penetrates into the mouth (20) of the fork (16) to bring about the unlocking of the means (40) for restraining the tow pin (24) and to enable the tow pin (24) to move into the position of engagement of the towing eye (21),
wherein, in the disengagement position, the restraining means (40) interact with a lower portion (24a) of the tow pin (24) in order to keep it raised and to prevent it from moving into the engagement position,
the restraining means comprising an appendage (40) on which, in the disengagement position, the lower end (24a) of the tow pin (24) rests.

2. A tow bar according to claim 1, **characterized in that** the restraining means (40) are secured to the control means (37).

3. A tow bar according to claim 2, **characterized in that** the restraining means (40) are produced integrally with the control means (37).

4. A tow bar according to claim 3, **characterized in that** the restraining means (40) and the control means (37) are produced by bending a single metal wire.

5. A tow bar according to any one of the preceding claims, comprising safety means against the accidental unlocking of the tow pin (24) in the engagement position, **characterized in that** the safety means comprise a safety device (31, 33) which interferes selectively with an upper portion (28) of the tow pin (24).

6. A tow bar according to claim 5, **characterized in that** the safety device (31, 33) comprises articulated lever means (31) having a projection (33) which interferes, in the engagement position, with a groove (28) formed in the tow pin (24) in the vicinity of a head (27) thereof, the projection (33) resting against the flank of the tow pin (24) in the disengagement position in order to keep the safety device unlocked.

7. A tow bar according to any one of the preceding claims, **characterized in that** the tow pin (24) is free from holes.

8. A tow bar according to any one of the preceding claims, **characterized in that**, in the engagement position, no mobile member or part thereof projects above an upper surface (31a) of the end fork (16).

## Patentansprüche

1. Zugstange für einen landwirtschaftlichen Traktor, umfassend:
- eine Endgabel (16) mit zwei Schenkeln (18, 19), welche einen Mund (20) zur Aufnahme einer Zugöse (21) eines Anhängers definieren, mit zwei axial gefluchteten Löchern, einem oberen (22) und dem einem unteren (23), welches das andere ist, die jeweils entsprechend in jedem der zwei Schenkel (18, 19) der Gabel (16) vorgesehen sind,
- einen Zugstift (24), welcher ausgewählt beweglich zwischen einer Eingriffsposition, in welcher der Zugstift (24) sich durch den Mund (20) erstreckt und sowohl im oberen als auch im unteren Loch (22, 23) in Eingriff steht, und einer Freigabeposition ist, in welcher der Zugstift (24) in das obere Loch (22) zurückgezogen ist, um den Mund (20) der Gabel (16) freizugeben,
- Mittel (40) zum Zurückhalten des Zugstiftes (24) in der Freigabeposition, wobei diese Mittel ausgewählt entriegelbar sind, um es dem Zugstift (24) zu erlauben, sich in die Eingriffsposition zu bewegen,
- Steuermittel (37), welche den Rückhaltemitteln (40) zugehörig sind und durch eine Zugöse (21) aktivierbar sind, die in den Mund (20) der Gabel (16) eindringt, um das Entriegeln der Mittel (40) zum Zurückhalten des Zugstiftes (24) zu bewirken und es dem Zugstift (24) zu ermöglichen, sich in die Position des Eingriffs der Zugöse (21) zu bewegen,
wobei in der Freigabeposition die Rückhaltemittel (40) auf einen unteren Abschnitt (24a) des Zugstifts (24) einwirken, um ihn angehoben zu halten und um ihn daran zu hindern, sich in die Eingriffsposition zu bewegen,
wobei die Rückhaltemittel einen Anhang (40) umfassen, auf welchem in der Freigabeposition das untere Ende (24a) des Zugstiftes (24) ruht.

2. Zugstange nach Anspruch 1, **dadurch gekennzeichnet, dass** die Rückhaltemittel (40) an den Steuermitteln (37) befestigt sind.

3. Zugstange nach Anspruch 2, **dadurch gekennzeichnet, dass** die Rückhaltemittel (40) einstückig mit den Steuermitteln (37) hergestellt sind.

4. Zugstange nach Anspruch 3, **dadurch gekennzeichnet, dass** die Rückhaltemittel (40) und die Steuermittel (37) durch Biegen eines einzelnen Metalldrahtes hergestellt sind.

5. Zugstange nach jedem beliebigen der vorangehenden Ansprüche, umfassend Sicherheitsmittel gegen unbeabsichtigtes Entriegeln des Zugstiftes (24) in der Eingriffsposition, **dadurch gekennzeichnet, dass** die Sicherheitsmittel eine Sicherheitsvorrichtung (31, 33) umfassen, welche ausgewählt in einen oberen Abschnitt (28) des Zugstiftes (24) eingreift.

6. Zugstange nach Anspruch 5, **dadurch gekennzeichnet, dass** die Sicherheitsvorrichtung (31, 33) gelenkige Hebelmittel (31) umfasst, welche einen Vorsprung (33) aufweisen, welcher in der Eingriffsposition in eine Nut (28) eingreift, die in der Zugstange (24) in der Nähe eines Kopfes (27) desselben ausgebildet ist, wobei der Vorsprung (33) gegen die Flanke des Zugstiftes (24) in der Freigabeposition drückt, um die Sicherheitsvorrichtung entriegelt zu halten.

7. Zugstange nach jedem beliebigen der vorangehenden Ansprüche, **dadurch gekennzeichnet, dass** der Zugstift (24) frei von Bohrungen ist.

8. Zugstange nach jedem beliebigen der vorangehenden Ansprüche, **dadurch gekennzeichnet, dass** in der Eingriffsposition kein bewegliches Element oder Teil davon über eine obere Oberfläche (31a) der Endgabel (16) vorragt.

## Revendications

1. Barre de remorquage pour tracteur agricole, comprenant :
- une fourche terminale (16) présentant deux branches (18, 19) définissant une embouchure (20) destinée à recevoir un oeillet de remorquage (21) d'une remorque, deux trous alignés axialement, un trou supérieur (22) et un trou inférieur (23), chacun étant respectivement prévu dans chacune des deux branches (18, 19) de la fourche (16),
- une goupille de remorquage (24) sélectivement mobile entre une position d'engagement dans laquelle la goupille de remorquage (24) s'étend à travers l'embouchure (20) et est engagée dans les deux trous, supérieur et inférieur (22, 23), et une position de désengagement dans laquelle la goupille de remorquage (24) est rétractée dans le trou supérieur (22) afin de laisser libre l'embouchure (20) de la fourche (16),
- un moyen de retenue (40) destiné à retenir la goupille de remorquage (24) dans la position de désengagement, lequel moyen peut être déverrouillé de manière sélective pour permettre à la goupille de remorquage (24) de passer dans la position d'engagement,
- un moyen de commande (37) associé au moyen de retenue (40) et susceptible d'être activé par un oeillet de remorquage (21) pénétrant dans l'embouchure (20) de la fourche (16) pour provoquer le déverrouillage du moyen (40) pour retenir la goupille de remorquage (24) et pour permettre à la goupille de remorquage (24) de passer dans la position d'engagement de l'oeillet de remorquage (21),
dans laquelle, dans la position de désengagement, le moyen de retenue (40) interagit avec une partie inférieure (24a) de la goupille de remorquage (24) afin de la maintenir relevée et pour l'empêcher de passer dans la position d'engagement,
le moyen de retenue comprenant un appendice (40) sur lequel, dans la position de désengagement, repose l'extrémité inférieure (24a) de la goupille de remorquage (24).

2. Barre de remorquage selon la revendication 1, **caractérisée en ce que** le moyen de retenue (40) est fixé sur le moyen de commande (37).

3. Barre de remorquage selon la revendication 2, **caractérisée en ce que** le moyen de retenue (40) est produit d'un seul tenant avec le moyen de commande (37).

4. Barre de remorquage selon la revendication 3, **caractérisée en ce que** le moyen de retenue (40) et le moyen de commande (37) sont produits par torsion d'un seul fil métallique.

5. Barre de remorquage selon l'une quelconque des revendications précédentes, comprenant un moyen de sécurité contre un déverrouillage accidentel de la goupille de remorquage (24) dans la position d'engagement, **caractérisée en ce que** le moyen de sécurité comprend un dispositif de sécurité (31, 33) qui interfère de manière sélective avec une partie supérieure (28) de la goupille de remorquage (24).

6. Barre de remorquage selon la revendication 5, **caractérisée en ce que** le dispositif de sécurité (31, 33) comprend un moyen de levier articulé (31) présentant une saillie (33) qui interfère, dans la position d'engagement, avec une rainure (28) constituée dans la goupille de remorquage (24) à proximité d'une tête (27) de celle-ci, la saillie (33) reposant contre le flanc de la goupille de remorquage (24) dans la position de désengagement afin de maintenir le dispositif de sécurité déverrouillé.

7. Barre de remorquage selon l'une quelconque des revendications précédentes, **caractérisée en ce que** la goupille de remorquage (24) est exempte de trous.

8. Barre de remorquage selon l'une quelconque des revendications précédentes, **caractérisée en ce que**, dans la position d'engagement, aucun élément ou partie mobile de celle-ci ne fait saillie au-dessus d'une surface supérieure (31a) de la fourche terminale (16).
